# EUROPÄISCHE PATENTSCHRIFT

(11) **EP 3 962 691 B1**
(45) Veröffentlichungstag und Bekanntmachung des Hinweises auf die Patenterteilung: **01.05.2024**
(21) Anmeldenummer: 20713853.8
(22) Anmeldetag: 13.03.2020
(51) Int. Cl.: B23K 26/352, C21D 1/09

(54) **ANORDNUNG ZUR MODIFIZIERUNG VON OBERFLÄCHEN METALLISCHER BAUTEILE**
ARRANGEMENT FOR MODIFYING SURFACES OF METAL COMPONENTS
AGENCEMENT POUR MODIFIER DES SURFACES DE COMPOSANTS MÉTALLIQUES

(30) Priorität: 30.04.2019 DE 102019206179
(43) Veröffentlichungstag der Anmeldung: 09.03.2022
(73) Patentinhaber: Fraunhofer-Gesellschaft zur Förderung der angewandten Forschung e.V., 80686 München (DE); Technische Universität Dresden, 01069 Dresden (DE)
(72) Erfinder: EL-KHOURY, Mikhael, 01277 Dresden (DE); KUNZE, Tim, 01277 Dresden (DE); SEIFERT, Marko, 01277 Dresden (DE); BRETSCHNEIDER, Sven, 01277 Dresden (DE)
(74) Vertreter: Pfenning, Meinig & Partner mbB
(86) Internationale Anmeldenummer: PCT/EP2020/056829
(87) Internationale Veröffentlichungsnummer: WO 2020/221499

(56) Entgegenhaltungen:
- EP-A1- 3 211 102
- EP-A2- 2 596 899
- WO-A1-2016/180736
- DE-A1-102004 051 876
- DE-A1-102017 121 444

## Beschreibung

Die Erfindung betrifft eine Anordnung zur Modifizierung von Oberflächen metallischer Bauteile. Mit der Erfindung bearbeitete Bauteile können beispielsweise bei reibender Beanspruchung, für Bauteile mit funktioneller Oberfläche, die eine gute Benetzbarkeit, Antigefriereigenschaften oder eine antibakterielle Wirkung aufweisen sollen, eingesetzt werden.

Es ist bekannt, Oberflächen von Bauteilen durch einen definierten Werkstoffabtrag für eine Verbesserung tribologischer Eigenschaften und zur Verringerung der Reibung die so beeinflussten Oberflächen zu modifizieren. Dazu wurden auch Verfahren des direkten Laserinterferenzstrukturierens (DLIP) genutzt, mit dem es möglich ist, mit hoher Produktivität Mikrostrukturen an Oberflächen auszubilden, die vorgegebene Strukturperioden Λ aufweisen.

Trotz der so erreichbaren Verbesserung tritt Verschleiß während der Nutzung ein, der wiederum zu einer Verschlechterung tribologischer Eigenschaften und zur Erhöhung der Reibung der mikrostrukturierten Oberflächen führen kann.

Diesem Problem kann man mit einer Erhöhung der Härte des Metalls, insbesondere im Oberflächenbereich so modifizierter Bauteile entgegen wirken.

Eine Erhöhung der Härte kann beispielsweise mittels Borieren erreicht werden, indem eine thermochemische Behandlung bei der Bor in den Werkstoff eindiffundiert und bei Stahl Eisenborid gebildet wird.

Es ist auch bekannt, thermoreaktive Deposition und Diffusion mittels gasbasierter Prozesse zur Erhöhung der Härte vorzunehmen. Damit kann man beispielsweise mit Chrom und Kohlenstoff in Stählen Carbide bilden.

Bei diesen Prozessen sind aber lange Behandlungszeiten für die Diffusion und ein hoher anlagentechnischer Aufwand nachteilig.

Mit PVD-Verfahren lassen sich harte Oberflächenbeschichtungen ausbilden, die mit Metall, Keramik oder auch diamantähnlichem Kohlenstoff gebildet sind. Auch hier sind entsprechend lange Zeiträume erforderlich, um eine ausreichende Schichtdicke zu erhalten. Auch das Arbeiten unter Vakuumbedingungen erfordert einen höheren Aufwand. Durch die Beschichtung werden Mikrostrukturen auch wieder geglättet, so dass der mit ihnen erreichbare Effekt zumindest teilweise rückgängig gemacht wird.

Auch das Nitrieren, das bevorzugt mittels Plasmaunterstützung erreicht werden kann, führt zu einer Erhöhung der Härte im Oberflächenbereich. Eine Nitrierung kann durch Ionen Implantation mit hohen Ionenenergien durchgeführt werden.

Insbesondere der hohe zeitliche, anlagentechnische und energetische Aufwand sind bei diesen bekannten Möglichkeiten nachteilig.

So ist in EP 2 201 102 A1 auf Möglichkeiten zur Beeinflussung einer Turbinenschaufel hingewiesen.

WO 2016/180 736 A1 betrifft eine Vorrichtung und ein Verfahren zur Wärmebehandlung mit einem Energiestrahl.

Aus der DE 10 2017 121 444 A1 sind ein Verfahren zur Herstellung eines Bauteils für einen Dämpfer, ein Bauteil für einen Dämpfer und eine Produktionsanlage bekannt, bei denen Feinstrukturen mit interferierenden Laserstrahlen ausgebildet werden.

Es ist daher Aufgabe der Erfindung, Möglichkeiten anzugeben, die eine dauerhaftere Verbesserung, insbesondere tribologischer Eigenschaften von strukturierten Oberflächen metallischer Bauteile, insbesondere an Bauteilen aus Stahl, bei reduziertem Aufwand ermöglichen.

Erfindungsgemäß wird diese Aufgabe mit einer Anordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen Anordnung zur Modifizierung von Oberflächen metallischer Bauteile ist ein erster Laserstrahl von einer ersten Laserstrahlungsquelle in eine erste optische Anordnung, die zur Aufteilung des ersten Laserstrahls in mindestens zwei Teilstrahlen und so ausgebildet, dass die mindestens zwei Teilstrahlen im Bereich der Oberfläche eines metallischen Bauteils miteinander interferieren, so dass ein Werkstoffabtrag an der Oberfläche des Bauteils mit definierter Strukturperiode Λ erfolgt, gerichtet.

Ein zweiter Laserstrahl ist von einer zweiten Laserstrahlungsquelle in eine zweite optische Anordnung gerichtet und die zweite optische Anordnung so ausgebildet, dass strukturierte Bereiche der Oberfläche des metallischen Bauteils mit dem mit der zweiten optischen Anordnung beeinflussten zweiten Laserstrahl gehärtet werden.

Die zu modifizierende Oberfläche des metallischen Bauteils und die Brennflecke, des auf die Oberfläche des metallischen Bauteils gerichteten mit der zweiten optischen Anordnung beeinflussten zweiten Laserstrahls und der mindestens zwei Teilstrahlen sind mindestens zweidimensional relativ zueinander bewegbar.

Die erste optische Anordnung kann dabei eine an sich für das direkte Laserinterferenzstrukturieren (DLIP) bekannte optische Anordnung sein, mit der die Teilung des einen Laserstrahls in die Teilstrahlen mittels Strahlteilern oder die Teilung mittels diffraktiver optischer Elemente erreicht werden kann und die Teilstrahlen auf eine zu strukturierende Oberfläche so gerichtet werden, dass sie in einem Abstand zur bzw. genau auf der zu strukturierenden Oberfläche miteinander interferieren. Für das Erreichen des letztgenannten Effektes können die Teilstrahlen auf ein fokussierendes optisches Element, bevorzugt mit einer parallel zueinander ausgerichteten Ausrichtung gerichtet werden. Solche optischen Anordnungen sind z.B. in DE 10 2011 119 764 B4, DE 10 2013 004 869 B4, DE 10 2015 214 960 B4, DE 10 2017 205 889 A1, DE 10 2018 200 036 B3, DE 10 2017 216 406 A1, US 9,370,843 B2, US 9,764,424 B2 oder EP 2,431,120 A1 beschrieben.

Zur Erreichung der Relativbewegung der Oberfläche und der Brennflecke kann mindestens ein um mindestens eine Rotationsachse verschwenkbares oder drehbares Laserstrahlung reflektierendes Element vorhanden sein. Mit dem einen um mindestens eine Rotationsachse verschwenkbaren oder drehbaren Laserstrahlung reflektierenden Element kann/können der Laserstrahl, der mittels der zweiten optischen Anordnung beeinflusst worden ist, und/oder die Teilstrahlen so ausgelenkt werden, dass der zu strukturierende und zu härtende Oberflächenbereich überstrichen bzw. die Relativbewegung unterstützt werden kann.

Allein oder zusätzlich kann die Relativbewegung aber auch durch eine zweidimensionale Bewegung des Bauteils realisiert werden.

Der mit der zweiten optischen Anordnung beeinflusste zweite Laserstrahl soll eine größere Leistung und eine größere Querschnittsfläche seines Brennflecks auf der Oberfläche des metallischen Bauteils aufweisen, als die mindestens zwei Teilstrahlen gemeinsam. Dabei ist die Leistungsdichte der miteinander interferierenden Teilstrahlen in ihren Brennflecken größer, als die des Brennflecks des zweiten Laserstrahls auf der Bauteiloberfläche.

Die zweite Anordnung kann optische Elemente aufweisen, mit denen der zweite Laserstrahl in seiner Strahlquerschnittsform und/oder seiner Brennweite beeinflusst werden kann.

Der mit der zweiten optischen Anordnung beeinflusste zweite Laserstrahl sollte so auf den zu härtenden Oberflächenbereich gerichtet sein, dass sein Brennpunkt nicht in der Ebene der Oberfläche des Bauteils angeordnet und der zweite Laserstrahl defokussiert auf diesen Oberflächenbereich gerichtet ist.

Mit der Energie des mit der zweiten optischen Anordnung beeinflussten zweiten Laserstrahls soll kein Werkstoffabtrag in strukturierten Oberflächenbereichen des Bauteils erfolgen. Der Bauteilwerkstoff bildet eine Wärmesenke, so dass eine schnelle Abkühlung erreicht werden kann, die das Härten im oberflächennahen Bereich des Bauteils unterstützt. Zusätzlich kann man das Bauteil ggf. auch noch kühlen.

Besonders vorteilhaft ist auch eine Einrichtung zur Bestimmung der Temperatur im Einflussbereich des Brennflecks, des mit der zweiten optischen Anordnung beeinflussten zweiten Laserstrahls vorhanden. Mit dieser Einrichtung kann eine Regelung beim Härten des Bauteilwerkstoffs im strukturierten Oberflächenbereich in situ erreicht werden, indem beispielsweise die Leistung der Laserstrahlungsquelle, mit der der zweite Laserstrahl emittiert wird, die Brennweite und/oder die Vorschubbewegungsgeschwindigkeit des Brennflecks des zweiten Laserstrahls angepasst werden kann. Die Temperatur kann dabei bevorzugt berührungslos detektiert und die Einrichtung bevorzugt integraler Bestandteil der zweiten optischen Anordnung sein, in dem mit einem Sensor vom mit dem zweiten Laserstrahl von der jeweiligen Bauteiloberfläche zurück reflektierte oder von dort emittierte elektromagnetische Strahlung erfasst und bei der Bestimmung der Temperatur berücksichtigt werden kann.

Der mit der zweiten optischen Anordnung beeinflusste zweite Laserstrahl kann mittels eines reflektierenden optischen Elements und die mindestens zwei Teilstrahlen können auf das mindestens eine um eine Rotationsachse verschwenkbare oder drehbare Laserstrahlung reflektierende Element gerichtet sein.

Das reflektierende optische Element kann ein halbdurchlässiger Spiegel sein und die Teilstrahlen können durch den halbdurchlässigen Spiegel mit dem mit der zweiten optischen Anordnung beeinflussten zweiten Laserstrahl gemeinsam auf das mindestens eine um eine Rotationsachse verschwenkbare oder drehbare Laserstrahlung reflektierende Element gerichtet werden.

Die Teilstrahlen können aber auch am reflektierenden Element vorbei auf das mindestens eine um eine Rotationsachse verschwenkbare oder drehbare Laserstrahlung reflektierende Element gerichtet sein.

Bevorzugt bilden zwei jeweils um eine Rotationsachse verschwenkbare Laserstrahlung reflektierende Elemente eine Scanneranordnung, die man auch als Galvo-Scanner bezeichnen kann.

Durch die Verschwenkung oder Drehung des/der um eine Rotationsachse verschwenkbaren oder drehbaren Laserstrahlung reflektierenden Elemente(s) kann man eine Auslenkung des zweiten Laserstrahls und der Teilstrahlen erreichen, bei der ein größerer Oberflächenbereich strukturiert und gehärtet werden kann.

Ein um mindestens eine Rotationsachse drehbares Laserstrahlung reflektierendes Element kann ein so genannter Polygonspiegel sein, an dessen Umfangsflächen Laserstrahlung reflektierende Elemente oder Schichten vorhanden sind, auf die der zweite Laserstrahl und/oder die Teilstrahlen bei der Drehung nacheinander auftreffen und je nach Auftreffwinkel reflektiert werden, so dass eine Vorschubbewegung von Brennflecken infolge dieser Drehung erreicht werden kann.

Mit einer Anordnung bei der Teilstrahlen und der zweite Laserstrahl gemeinsam mittels mindestens einem um eine Rotationsachse verschwenkbaren oder drehbaren Laserstrahlung reflektierenden Element ausgelenkt werden, können die Mikrostrukturierung und das Laserhärten zumindest nahezu synchron durchgeführt werden, was die für die Modifizierung der jeweiligen Oberfläche erforderliche Zeit reduzieren kann.

Die Laserstrahlungsquelle, von der der zweite Laserstrahl emittiert wird, sollte ein Hochleistungslaser mit einer Leistung von mindestens 100 W sein.

Seine Leistungsdichte im Brennfleck sollte im Bereich von 5 W/mm² bis 1000 W/mm² gehalten sein. Es sollten Vorschubgeschwindigkeiten bei der Relativbewegung des zweiten Laserstrahls zur Bauteiloberfläche im Bereich von 100 mm/min bis 100 m/min eingehalten sein. Die Breite des Brennflecks (Breite der Laserhärtezone) kann unter Nutzung strahlformender Optiken bevorzugt im Bereich ca. 1 mm bis > 150 mm variiert werden, wobei grundsätzlich keine Ober- und Untergrenzen existieren können.

Mit der Erfindung können die Oberflächenhärte, die Festigkeit, die Verschleiß-, Ermüdungsresistenz und Reibeigenschaften mikrostrukturierter Oberflächen metallischer Bauteile verbessert und die Funktionalität von Mikrostrukturen während des Einsatzes zumindest über einen verlängerten Zeitraum beibehalten werden.

Die erfinderische Anordnung ist einfach, kompakt im Aufbau und benutzerfreundlich, was die Kosten und die Produktivität positiv beeinflusst. Sie ist für die Massenproduktion geeignet und kann in bestehende Prozessketten integriert werden. Außerdem sind keine zusätzlichen Arbeitsschritte, wie z.B. eine absorbierende Beschichtung für das Härten erforderlich, da die Mikrostrukturierung allein schon die Absorption der Laserstrahlung beim Härten positiv beeinflusst.

An die bei der Erfindung einsetzbaren Laserstrahlungsquellen werden nur geringfügige Anforderungen gestellt.

Es können nahezu alle Stahlwerkstoffe so bearbeitet werden.

Nachfolgend soll die Erfindung beispielhaft näher erläutert werden. Merkmale können unabhängig vom jeweiligen Beispiel und der Darstellung in einer der Figuren miteinander kombiniert werden.

Dabei zeigen:
Figur 1 in schematischer Darstellung ein Beispiel einer optischen Anordnung und
Figur 2 in schematischer Darstellung ein weiteres Beispiel einer optischen Anordnung.

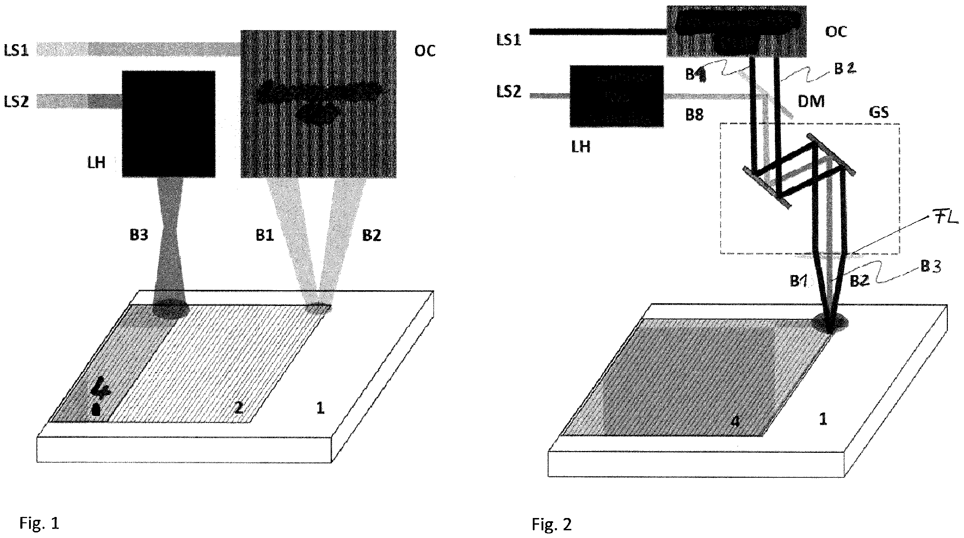

In Figur 1 ist ein Beispiel einer erfindungsgemäßen Anordnung gezeigt, mit der Oberflächenbereiche 2 und 4 zuerst mit einer mikrostrukturierten Oberfläche versehen und anschließend gehärtet werden.

Dabei ist ein Bauteil 1 aus Baustahl auf einer Bewegungseinheit (nicht gezeigt) angeordnet, mit der eine zweidimensionale Bewegung des Bauteils 1 ermöglicht werden kann.

Ein von einer ersten Laserstrahlungsquelle (nicht gezeigt) emittierter erster Laserstrahl LS1 wird auf eine erste optische Anordnung OC gerichtet. Der erste Laserstrahl LS1 wird damit in zwei Teilstrahlen B1 und B2 aufgeteilt. Außerdem werden die beiden Teilstrahlen B1 und B2 so auf die Bauteiloberfläche gelenkt, dass sie im Bereich der Bauteiloberfläche miteinander interferieren. Dadurch wird eine definierte Mikrostruktur mit konstanter oder falls gewünscht wechselnder Strukturperiode Λ auf der Oberfläche des Bauteils ausgebildet. Bei dem gezeigten Beispiel ist die Mikrostruktur mit linienförmigen Konturelementen gebildet.

Der bereits strukturierte Oberflächenbereich 2 wird mit einem zweiten Laserstrahl B3 so bestrahlt, dass ein Laserhärten in einem oberflächennahen Bereich des Bauteils 1 erreicht wird. Dazu wird ein zweiter Laserstrahl LS2 von einer zweiten Laserstrahlungsquelle (nicht gezeigt) auf eine zweite optische Anordnung LH gerichtet. Mit der zweiten optischen Anordnung LH wird der zweite Laserstrahl LS2 so beeinflusst, dass er in zum Härten geeigneter Form auf die Oberfläche des Bauteils 1 auftrifft.

Bei diesem und dem Beispiel nach Figur 2 wurde eine Laserstrahlungsquelle mit folgenden Parametern für das Härten eingesetzt:
Bei diesem und dem Beispiel nach Figur 2 wurde eine Laserstrahlungsquelle mit folgenden Parametern für das Härten eingesetzt:
Hochleistungsdiodenlaser mit einer Maximalleistung von 9kW
Wellenlängenbereich: 910 nm - 1030 nm
Lichtleitfaser mit Kerndurchmesser 1000 µm
Abbildungsoptik mit Kollimationslinse und Fokussierlinse
Der Brennfleck des zweiten Laserstrahls B3 hatte folgenden Parameter: Kreisförmige Brennfleckgeometrie
Top-Hat-Intensitätsprofil
Brennfleckdurchmesser: ca. 7 mm

Bei dem in Figur 2 gezeigten Beispiel werden wieder zwei Laserstrahlen LS1 und LS2 von entsprechenden Laserstrahlungsquellen emittiert. Der erste Laserstrahl LS1 trifft auf die erste optische Anordnung OC und wird in zwei Teilstrahlen B1 und B2 geteilt, die beide parallel zueinander ausgerichtet durch einen halbdurchlässigen Spiegel DM in Richtung auf zwei um eine Rotationsachse verschwenkbare Laserstrahlung reflektierende Elemente, die Bestandteil einer Scanneranordnung GS sind, gerichtet.

Der zweite Laserstrahl LS2 wird in eine zweite optische Anordnung LH gerichtet und mittels der zweiten optischen Anordnung so geformt und fokussiert, dass sein Brennfleck in zum Laserhärten geeigneter Form auf einen Oberflächenbereich 4 auftreffen kann. Vor dem Auftreffen auf den Oberflächenbereich 4 trifft der so beeinflusste erste Laserstrahl als Laserstrahl B3 auf eine reflektierende Oberfläche des halbdurchlässigen Spiegels DM auf und wird in Richtung auf eine erstes um eine Rotationsachse verschwenkbares Laserstrahlung reflektierendes Element und von diesem auf ein zweites um eine Rotationsachse verschwenkbares Laserstrahlung reflektierendes Element reflektiert. Erstes und zweites um eine Rotationsachse verschwenkbares Element sind Bestandteil der Scanneranordnung GS.

Dadurch werden die Teilstrahlen B1 und B2 sowie der Laserstrahl B3 für eine Relativbewegung ausgelenkt.

Wie man Figur 2 entnehmen kann, ist zumindest im Strahlengang der beiden Teilstrahlen B1 und B2 ein fokussierendes optisches Element FL angeordnet, mit dem die Teilstrahlen B1 und B2 so zueinander ausgerichtet sind, dass sie im Bereich der Bauteiloberfläche miteinander interferieren und eine direkte Laserinterferenzstrukturierung (DLIP) im Oberflächenbereich 4 gemeinsam mit dem Laserhärten durchgeführt werden kann.

Strukturierung und Härten können so zumindest nahezu synchron durchgeführt werden.

In nicht dargestellter Form kann bei beiden Beispielen eine Temperaturmessung und eine diese berücksichtigende Regelung durchgeführt werden, wie dies im allgemeinen Teil der Beschreibung erläutert worden ist.

## Patentansprüche

1. Anordnung zur Modifizierung von Oberflächen metallischer Bauteile, mit einer ersten und zweiten Laserstrahlungsquelle sowie einer ersten und zweiten optischen Anordnung (OC, LH), wobei ein erster Laserstrahl (LS1) von der ersten Laserstrahlungsquelle in die erste optische Anordnung (OC) gerichtet ist,
die zur Aufteilung des ersten Laserstrahls (LS1) in mindestens zwei Teilstrahlen (B1, B2) und so ausgebildet ist, dass die mindestens zwei Teilstrahlen (B1, B2) im Bereich der Oberfläche eines metallischen Bauteils (1) miteinander interferieren, so dass ein Werkstoffabtrag an der Oberfläche des Bauteils (1) mit definierter Strukturperiode Λ erfolgt, **dadurch gekennzeichnet, dass**
ein zweiter Laserstrahl (LS2) von der zweiten Laserstrahlungsquelle in die zweite optischen Anordnung (LH) gerichtet ist,
und die zweite optische Anordnung (LH) so ausgebildet ist, dass strukturierte Oberflächenbereiche (4) der Oberfläche des metallischen Bauteils (1) mit dem mit der zweiten optischen Anordnung (LH) beeinflussten zweiten Laserstrahl (B3) gehärtet werden und dort kein Werkstoffabtrag mit der Energie des zweiten Laserstrahls (B3) erfolgt, und die Oberfläche des metallischen Bauteils (1) und die Brennflecke des auf die Oberfläche des metallischen Bauteils (1) gerichteten mit der zweiten optischen Anordnung (LH) beeinflussten zweiten Laserstrahls (B3) und der mindestens zwei Teilstrahlen (B1, B2) mindestens zweidimensional relativ zueinander bewegbar sind,
wobei der mit der zweiten optischen Anordnung (LH) beeinflusste zweite Laserstrahl (B3) eine größere Leistung und eine größere Querschnittsfläche seines Brennflecks auf der Oberfläche des metallischen Bauteils (1) aufweist als die mindestens zwei Teilstrahlen (B1, B2) gemeinsam, und
die Leistungsdichte der miteinander interferierenden Teilstrahlen (B1, B2) in ihren Brennflecken größer ist als die des Brennflecks des zweiten Laserstrahls auf der Bauteiloberfläche.

2. Anordnung nach Anspruch 1, **dadurch gekennzeichnet, dass** zur Erreichung der Relativbewegung mindestens ein um mindestens eine Rotationsachse verschwenkbares oder drehbares Laserstrahlung reflektierendes Element vorhanden ist.

3. Anordnung nach einem der vorhergehenden Ansprüche, **dadurch gekennzeichnet, dass** eine Einrichtung zur Bestimmung der Temperatur im Einflussbereich des Brennflecks, des mit der zweiten optischen Anordnung (LH) beeinflussten zweiten Laserstrahls (B3) vorhanden ist.

4. Anordnung nach dem vorhergehenden Anspruch, **dadurch gekennzeichnet, dass** die Einrichtung zur Bestimmung der Temperatur Bestandteil der zweiten optischen Anordnung (LH) ist.

5. Anordnung nach einem der vorhergehenden Ansprüche, **dadurch gekennzeichnet, dass** der mit der zweiten optischen Anordnung (LH) beeinflusste zweite Laserstrahl (B3) mittels eines reflektierenden optischen Elements (DM) und
die mindestens zwei Teilstrahlen (B1, B2) auf das mindestens eine um eine Rotationsachse verschwenkbare oder drehbare Laserstrahlung reflektierende Element gerichtet sind.

6. Anordnung nach dem vorhergehenden Anspruch, **dadurch gekennzeichnet, dass** das reflektierende optische Element (DM) ein halbdurchlässiger Spiegel ist, und die Teilstrahlen (B1, B2) durch den halbdurchlässigen Spiegel mit dem mit der zweiten optischen Anordnung (LH) beeinflussten zweiten Laserstrahl (B3) gemeinsam auf das mindestens eine um eine Rotationsachse verschwenkbare oder drehbare Laserstrahlung reflektierende Element gerichtet sind.

7. Anordnung nach einem der vorhergehenden Ansprüche, **dadurch gekennzeichnet, dass** zwei jeweils um eine Rotationsachse verschwenkbare Laserstrahlung reflektierende Elemente eine Scanneranordnung (GS) bilden.

8. Anordnung nach einem der vorhergehenden Ansprüche, **dadurch gekennzeichnet, dass** der mit der zweiten optischen Anordnung (LH) beeinflusste zweite Laserstrahl (B3) so auf den zu härtenden Oberflächenbereich (4) gerichtet ist, dass sein Brennpunkt nicht in der Ebene der Oberfläche des Bauteils angeordnet ist.

## Claims

1. Arrangement for modifying surfaces of metallic components, having a first and second laser radiation source and a first and second optical arrangement (OC, LH), wherein a first laser beam (LS1) is directed from the first laser radiation source into the first optical arrangement (OC), which is designed to split the first laser beam (LS1) into at least two partial beams (B1, B2) and is designed in such a way that the at least two partial beams (B1, B2) interfere with one another in the region of the surface of a metallic component (1), so that material removal takes place on the surface of the component (1) with a defined structural period Λ, **characterised in that**
a second laser beam (LS2) is directed from the second laser radiation source into the second optical arrangement (LH), and the second optical arrangement (LH) is designed in such a way that structured surface regions (4) of the surface of the metallic component (1) are cured by the second laser beam (B3) being influenced by the second optical arrangement (LH), and material removal does not take place there with the energy of the second laser beam (B3), and
the surface of the metallic component (1) and the focal spots of the second laser beam (B3) directed onto the surface of the metallic component (1) and influenced by the second optical arrangement (LH) and of the at least two partial beams (B1, B2) can be moved at least two-dimensionally relative to one another, wherein
the second laser beam (B3) being influenced by the second optical arrangement (LH) has a greater power and a larger cross-sectional area of its focal spot on the surface of the metallic component (1) than the at least two partial beams (B1, B2) together, and
the power density of the interfering partial beams (B1, B2) in their focal spots is greater than that of the focal spot of the second laser beam on the component surface.

2. Arrangement according to claim 1, **characterized in that** at least one element reflecting laser radiation which can be pivoted or rotated about at least one axis of rotation is provided to achieve the relative movement.

3. Arrangement according to any one of the preceding claims, **characterized in that** a device for determining the temperature in the sphere of influence of the focal spot of the second laser beam (B3) being influenced by the second optical arrangement (LH) is provided.

4. Arrangement according to the preceding claim, **characterised in that** the device for determining the temperature forms a part of the second optical arrangement (LH).

5. Arrangement according to any one of the preceding claims, **characterised in that** the second laser beam (B3) being influenced by the second optical arrangement (LH) is directed by means of a reflective optical element (DM) and
the at least two partial beams (B1, B2) are directed onto the at least one element reflecting laser radiation which can be pivoted or rotated about an axis of rotation.

6. Arrangement according to the preceding claim, **characterised in that** the reflecting optical element (DM) is a semi-transparent mirror, and the partial beams (B1, B2) are directed through the semi-transparent mirror together with the second laser beam (B3) being influenced by the second optical arrangement (LH), onto the at least one element reflecting laser radiation which can be pivoted or rotated about an axis of rotation.

7. Arrangement according to any one of the preceding claims, **characterized in that** two elements reflecting laser radiation, which are each pivotable about an axis of rotation, form a scanner arrangement (GS).

8. Arrangement according to any one of the preceding claims, **characterised in that** the second laser beam (B3) being influenced by the second optical arrangement (LH) is directed onto the surface region (4) to be cured in such a manner that its focal point is not arranged in the plane of the surface of the component.

## Revendications

1. Disposition pour la modification de surfaces de composants métalliques, avec une première et une deuxième source de rayons laser, ainsi qu'un premier et un deuxième dispositif optique (OC, LH), dans laquelle un premier rayon laser (LS1) est dirigé de la première source de rayon laser vers le premier dispositif optique (OC), qui est conçue pour la division du premier rayon laser (LS1) en au moins deux rayons partiels (B1, B2) et qui est conçue de sorte que les au moins deux rayons partiels (B1, B2) interfèrent entre eux au niveau d'une surface d'un composant métallique (1) de sorte qu'un enlèvement de matière ait lieu à la surface du composant (1), avec une période de structure Λ définie,
**caractérisée en ce qu'**un deuxième rayon laser (LS2) est dirigé par la deuxième source de rayon laser vers le deuxième dispositif optique (LH) et le deuxième dispositif optique (LH) est conçu de sorte que des parties structurées (4) de la surface du composant métallique (1) sont durcies avec le deuxième rayon laser (B3) influencé avec le deuxième dispositif optique (LH) et de sorte qu'aucun enlèvement de matière n'a lieu avec l'énergie du deuxième rayon laser (B3) et
la surface du composant métallique (1) et les taches focales du deuxième rayon laser (B3), influencé avec le deuxième dispositif optique (LH) et dirigé vers la surface du composant métallique (1) et des au moins deux rayons partiels (B1, B2) peuvent être déplacées les unes par rapport aux autres de manière au moins bidimensionnelle, dans laquelle
le deuxième rayon laser (B3), influencé avec le deuxième dispositif optique (LH) présente une puissance et une surface de section transversale sur la surface du composant métallique (1) plus grandes que les au moins deux rayons laser (B1, B2) cumulés et
les densités de puissance des rayons partiels interférant entre eux (B1, B2) sont plus grandes, dans leurs taches focales, que celle de la tache focale du deuxième rayon laser sur la surface du composant.

2. Disposition selon la revendication 1, **caractérisée en ce que**, afin d'obtenir un mouvement relatif, au moins un élément réfléchissant les rayons laser pivotant ou tournant autour d'un axe de rotation est prévu.

3. Disposition selon l'une des revendications précédentes, **caractérisée en ce qu'**un dispositif pour la détermination de la température dans la zone d'influence de la tache focale du deuxième rayon laser (B3), influencé avec le deuxième dispositif optique (LH) est prévu.

4. Disposition selon la revendication précédente, **caractérisée en ce que** le dispositif pour la détermination de la température fait partie du deuxième dispositif optique (LH).

5. Disposition selon l'une des revendications précédentes, **caractérisée en ce que** le deuxième rayon laser (B3), influencé avec le deuxième dispositif optique (LH) est dirigé au moyen d'un élément optique réfléchissant (DM) et
les au moins deux rayons partiels (B1, B2) sont dirigés vers l'au moins un élément réfléchissant les rayons laser pivotant ou tournant autour d'un axe de rotation.

6. Disposition selon la revendication précédente, **caractérisée en ce que** l'élément optique réfléchissant (DM) est un miroir semi-sphérique et les rayons partiels (B1, B2) sont dirigés par le miroir semi-sphérique, conjointement avec le deuxième rayon laser (B3) influencé avec le deuxième dispositif optique (LH), vers l'au moins un élément réfléchissant les rayons laser pivotant ou tournant autour d'un axe de rotation.

7. Disposition selon la revendication précédente, **caractérisée en ce que** deux éléments réfléchissants pivotant autour d'un axe de rotation constituent respectivement un dispositif de type scanner (GS).

8. Disposition selon la revendication précédente, **caractérisée en ce que** le deuxième rayon laser (B3) influencé avec le deuxième dispositif optique (LH) est dirigé vers la partie de surface (4) à durcir de sorte que sa tache focale ne se trouve pas dans le plan de la surface du composant.
